# EUROPEAN PATENT APPLICATION

(11) **EP 3 627 266 A1**
(43) Date of publication of application: **25.03.2020**
(21) Application number: 19197009.4
(22) Date of filing: 12.09.2019
(51) Int. Cl.: G05D 1/00

(54) **MISSION MANAGEMENT INCEPTOR FOR MULTI-USE INTERACTION WITH AN AUTONOMOUS FLIGHT SYSTEM**

(30) Priority: 18.09.2018 US 201816134121
(71) Applicant: Sikorsky Aircraft Corporation, Stratford, CT 06615 (US)
(72) Inventor: CHEREPINSKY, Igor, Sandy Hook, CT 06482 (US); WARD, Mark Daniel, Milford, CT 06460 (US); SHIELDS, Paul Michael, New Haven, CT 06511 (US); MACISAAC LAMPAZZI, Margaret, Oxford, CT 06478 (US)
(74) Representative: Schmitt-Nilson Schraud Waibel Wohlfrom Patentanwälte Partnerschaft mbB

(57) **Abstract**

According to an aspect, an apparatus is provided. A computing system is provided. A user interface is configured to receive an input from a user related to one or more changes to flight path and transmit the input to an autonomous flight system. The input to the autonomous flight system does not cause the autonomous flight system to disengage.

## Description

The subject matter disclosed herein generally relates to user interfaces for vehicles, and more particularly to user interfaces for mission management interactions associated with an autonomous system.

Traditional flight controllers are used to provide a direct interaction with a conventional flight control system; however, traditional flight controllers are not suitable for higher level operations, for example, an abstract interaction with an autonomous system. Using traditional flight controllers to interact with an autonomous system is problematic because traditional flight controllers are designed to address mechanical flight control characteristics and ergonomic requirements of a flight. Moreover, while existing fly-by-wire controllers interact with a digital flight control system, these controllers, as well as traditional flight controllers fail to include human machine interaction capabilities that are needed to manage interactions with an autonomous system. Accordingly, existing inceptors/controllers are limited to serving as "input" devices and lack the two-way interaction characteristics needed for desired interactions with an autonomous flight system.

According to an aspect of the invention, an apparatus is provided. The apparatus includes a computing system and a user interface configured to receive an input from a user related to one or more changes to a flight path and transmit the input to an autonomous flight system. The apparatus allows for inputs to the autonomous flight system and alleviates the need for the autonomous flight system to disengage.

In addition, the user interface provides feedback associated with the one or more changes to the user.

In addition, the feedback is visual, auditory or tactile.

In addition, the user interface includes at least one of: a touch-based display screen, a physical button, a knob, a proximity sensor, a thumb wheel and a joystick.

In addition, the touch-based display screen provides mode announcements, an alert or visual feedback related to the one or more changes to the user.

In addition, the touch-based display screen can provide a change confirmation associated with the one or more changes to the user.

In addition, the one or more changes include changes to at least one of a final destination, an intermediate destination, speed, a heading, climb, descent and a turn.

In addition, the apparatus is communicatively coupled to an autonomous mission analysis user interface.

According to further aspects of the invention, a method for implementing autonomous flight operations in an autonomous flight system is provided. The method includes receiving, by a processor, a flight plan. The method further includes conducting, by the processor, autonomous flight operations on a vehicle in response to the received flight plan. The method further includes determining, by the processor, that an input is received at one or more inceptors. The method further includes changing, by the processor, a flight path related to the flight plan in response the received input.

According to further aspects of the invention, an optionally-piloted vehicle system for an aircraft is provided. The optionally-piloted vehicle system includes an autonomous system, and a processing system coupled to the autonomous system. The processing system includes a processor and memory having instructions stored thereon that, when executed by the processor, cause the autonomous system to: determine a flight plan; conduct autonomous flight operations on a vehicle in response to the determined flight plan; determine that an input is received at one or more inceptors; and change a flight path related to the flight plan in response the received input.

The subject matter which is regarded as the invention is particularly pointed out and distinctly claimed in the claims at the conclusion of the specification. The foregoing and other features, and advantages of the invention are apparent from the following detailed description taken in conjunction with the accompanying drawings in which:
FIG. 1 illustrates a perspective view of a vehicle according to an embodiment;
FIG. 2 illustrates a schematic of a cockpit of the vehicle according to an embodiment;
FIG. 3 illustrates a schematic block diagram of a computing system replicating the controls on an autonomous mission analysis user interface according to an embodiment;
FIG. 4 illustrates a dataflow diagram for context-based autonomous perception according to an embodiment of the invention;
FIG. 5 illustrates inceptors used in an autonomous flight system according to an embodiment;
FIG. 6 depicts a flow diagram for implementing autonomous flight operations by an autonomous flight system according to an embodiment; and
FIG. 7 illustrates a schematic of an example computing system/processing system which can be utilized to implement any features according to an embodiment.

A traditional cockpit is built from the ground up based on the number of pilots that will fly the aircraft, typically two pilots are used to fly a majority of helicopters. When an autonomous kit is installed, the aircraft can be designed to operate as a traditional cockpit, autonomously, or a combination thereof, which can allow for no human pilot, single pilot or two pilot operations. The autonomous kit can allow the aircraft to change flight operations during a flight based on need.

Embodiments described herein allow a user to influence an autonomously traveled path, mission goals and mission objectives without disengaging from an autonomous system. Particularly, this allows for one or more inceptors that can be used to communicate and interact with the autonomous system in order to cause the autonomous system to adjust a planned flight path. Additionally, the autonomous system can provide feedback to the user related to the associated adjustments using multiple information modalities including tactile and visual through a two-way communication between the one or more inceptors and the autonomous system.

Particularly, embodiments provide one or more inceptors to support single pilot or pilotless operations. When conducting piloted operations, the autonomous system provides an ability interact in a "pilot directed autonomy" mode, also known as "pilot assisted autonomy" mode. For example, through a perception system and a human machine interface (HMI) of the autonomous system, embodiments are able to adapt the human machine interface to the pilot thereby bringing the information to him/her and tailoring the information as needed for operations. Embodiments disclose installing and positioning a touch-based display as part of an autonomy "kit" that replicates and/or extends existing cockpit functionality. An autonomous mission analysis user interface, for example, as the touch-based display screen, which is configured to replicate physical switches and panels on a single interface.

Additionally, the adaptable user interface is configured to expose (i.e., display) a mission tasking interface on the display, for example, to plan, monitor, and/or control missions. The touch-based interface can change its interface to adapt to a mission scenario, for example, by exposing different information content/buttons, or different mission tasks on the display screen. As an example, if the mission scenario is for a Medevac, the displayed content on the touch-based interface will be a tasking interface appropriate to that Medevac mission. Further, if the aircraft is in the landing phase of flight, the autonomous mission analysis user interface is adapted so that there is an array of buttons/information content uniquely tailored to information needs and actions of the landing phase of flight. The autonomous mission analysis interface (automatically) responds to its environment and mission needs in order to tailor the human machine interface.

The one or more inceptors can be used instead, or in conjunction with the autonomous mission analysis user interface to communicate and interact with the autonomous system in order to cause the autonomous system to adjust the flight path while in operation. Inputs of the one or more inceptors can cause a temporary suspension of a planned path and subsequently alters or returns to the flight path after entry of the inputs into the autonomous system. Accordingly, the user/pilot can adjust autonomous system operations, for example, flight destination or flight speed, without disengaging autonomous flight operations (autonomous mode).

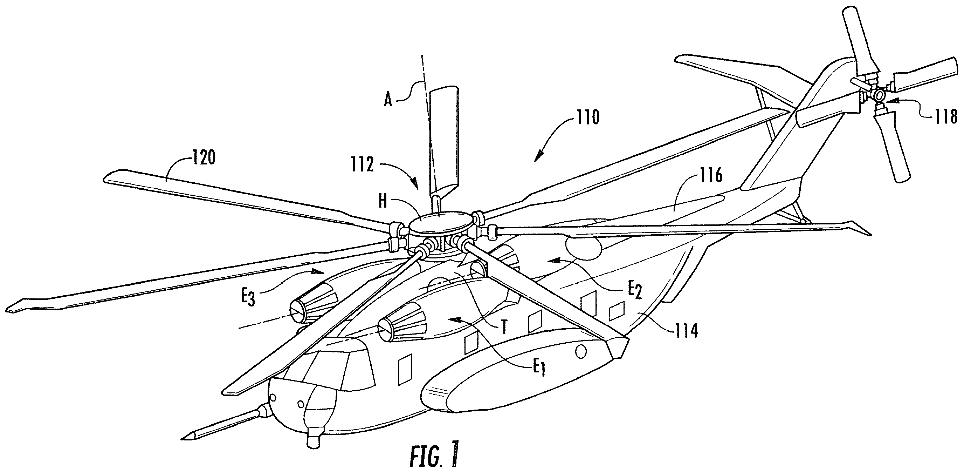

Referring now to the drawings, FIG. 1 illustrates a perspective view of a vehicle 110, such as a rotary wing aircraft having a main rotor assembly 112 according to an embodiment. The vehicle 110 includes an airframe 114 having an extended tail 116 which mounts a tail rotor system 118, such as an anti-torque system, a translational thrust system, a pusher propeller, a rotor propulsion system, and the like. The main rotor assembly 112 includes a plurality of rotor blade assemblies 120 mounted to a rotor hub H. The main rotor assembly 112 is driven about an axis of rotation A through a main gearbox (illustrated schematically at T) by one or more engines E, such as, by example only, E1, E2, and E3. Although a particular helicopter configuration is illustrated and described in an embodiment as the vehicle 110, other vehicles, configurations, equipment, and/or machines, such as high speed compound rotary wing aircraft with supplemental translational thrust systems, dual contra-rotating, coaxial rotor system aircraft, tilt-rotors and tilt-wing aircraft, and fixed wing aircraft, as well as land and other legacy equipment and vehicles having legacy analog HMI components, will also benefit from embodiments of the invention.

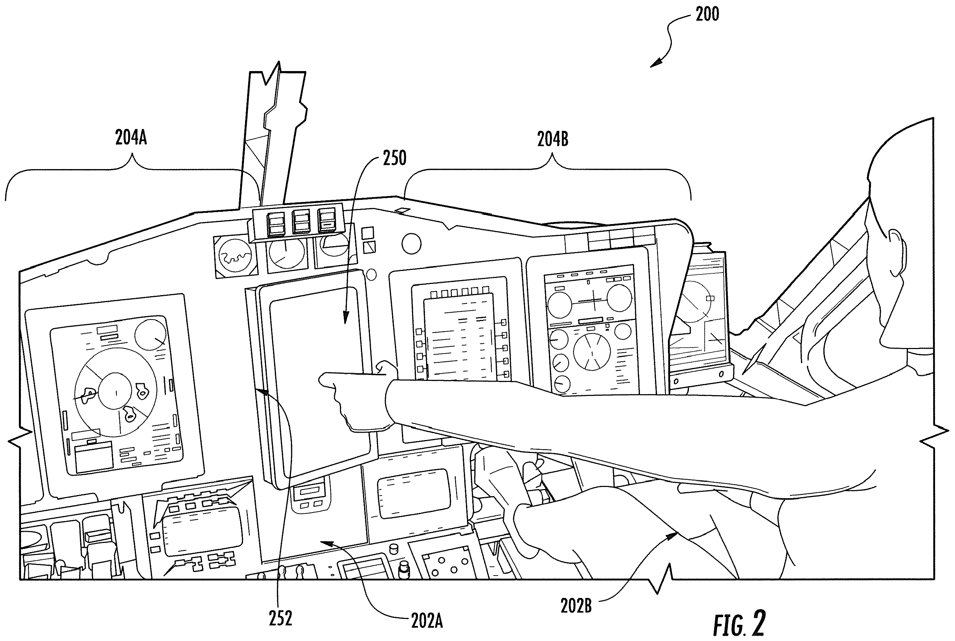

FIG. 2 illustrates a schematic of a cockpit 200 of the vehicle 110 according to an embodiment. The example cockpit 200 can include a first pilot space 202A and a second pilot space 202B in the vehicle 110. The first pilot space 202A accommodates a first pilot (or crewmember) seated in the first pilot space 202A, and the second pilot space 202B accommodates a second pilot (or crewmember) seated in the second pilot space 202B. It should be appreciated that there can be more than two pilot spaces.

A cockpit 200 having two pilot spaces 202A and 202B typically requires two pilots to fly the vehicle 110. The first pilot space 202A has (aircraft) controls 204A accessible to the first seated pilot, and the second pilot space 202B has (aircraft) controls 204B accessible to the second seated pilot.

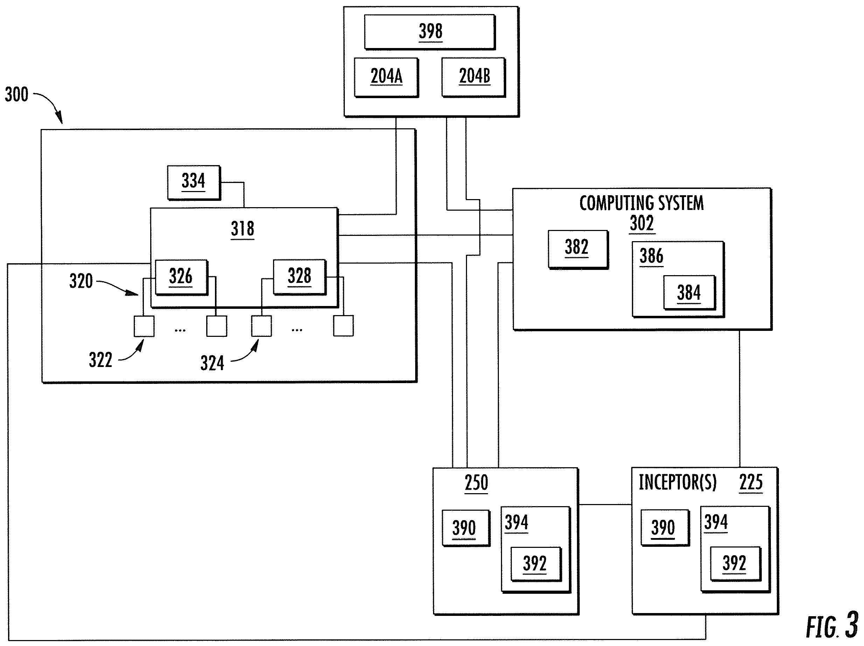

The controls 204A and/or 204B can be physical and/or digital HMI components configured to govern controlled devices 398 (depicted in FIG. 3). The cockpit 200 contains components to control and/or monitor flight operations, such as, but not limited to, components of controlled devices 398 for controlling actuating control surfaces, lift-increasing flaps and the like. Also, the controls 204A and/or 204B can be components for actuating the landing gear, the engines, the air-brakes, switches, needles, gauges, etc., along with and any other instruments necessary for operating, piloting, and/or driving the vehicle 110. The components of controls 204A and/or 204B may include, but are not limited to, a collective lever, cyclic stick, directional control pedals, as well as a throttle, switch, handle, wheel, lever, dial, pedal, and any other operator engageable component.

An autonomous mission analysis user interface 250 can be a touch-based interface, for example, a touch screen, installed and positioned in the instrument panel of the cockpit 200. The autonomous mission analysis user interface 250 is used to replicate cockpit 200 components during an autonomous flight or autonomous assisted flight. In some implementations, the autonomous mission analysis user interface 250 is designed to fit in a space or pocket 252 in the cockpit 200. In some implementations, there may not be a pocket 252, and the autonomous mission analysis user interface 250 is designed to fit up against the instrument panel.

FIG. 3 illustrates a schematic block diagram of an autonomous perception system 300 which can be used to replicate the controls 204A and/or 204B via the autonomous mission analysis user interface 250 and one or more inceptors 225 according to an embodiment. A computing system 302 can be connected to the controls 204A and 204B to replicate functionality of the controls 204A and 204B on the autonomous mission analysis user interface 250, such that the functionality of the controls 204A and 204B can be provided on (displayed) and operated using the autonomous mission analysis user interface 250. Additionally, an autonomous perception system 300 can be connected directly to the vehicle controls 204A and 204B. The autonomous perception system 300 can provide the functionality of the controls 204A and 204B on the autonomous mission analysis user interface 250 as discussed herein. The autonomous mission analysis user interface 250 can include one or more processors 390 executing software 392 stored in memory 394 in order to display and execute the functionality of the controls 204A and 204B on input/output devices (not shown) as discussed herein. The input/output devices can include a touch-based display screen, physical buttons/knobs, joystick, etc. Further regarding the autonomous perception system 300 is discussed below.

The computing system 302, or another computing system (not shown) can be connected to the controls 204A and 204B to replicate functionality of the controls 204A and 204B on the autonomous mission analysis user interface 250, such that the functionality of the controls 204A and 204B can be provided on (e.g., a display) and interacted with using an inceptor(s) 225. The autonomous perception system 300 can provide the functionality of the controls 204A and 204B through the inceptor(s) 225 as discussed herein. The inceptor(s) 225 can include one or more processors 390 executing software 392 stored in memory 394 in order to display and execute the functionality of the controls 204A and 204B. The inceptor(s) 225 can also communicate with the autonomous mission analysis user interface 250 to coordinate and manage flight operations associated with vehicle 110.

Context-based autonomous perception can be provided for the vehicle 110 which can be an autonomous vehicle, such as an autonomous aircraft. Examples include optionally-piloted vehicles (OPVs) and unmanned aerial vehicles (UAVs), and the autonomous perception system 300 can be provided to assist in, for example, human-piloted aircraft landing zone selection. Embodiments can also be used in a number of land, water, or air-based autonomy applications, such as vehicle guidance and target recognition. Using the autonomous perception system 300, the vehicle 110 can operate as an autonomous rotary-wing unmanned aerial vehicle (UAV). The autonomous perception system 300 implements context-based autonomous perception according to an embodiment of the invention.

The autonomous perception system 300 includes a processing system 318 having one or more processors and memory to process sensor data acquired from a perception sensor system 320. The perception sensor system 320 may be attached to or incorporated within the airframe 114. The perception sensor system 320 includes one or more three-dimensional imaging sensors 322 and one or more two-dimensional imaging sensors 324. The processing system 318 processes, in one non-limiting embodiment, perception sensor data acquired through the perception sensor system 320 while the vehicle 110, operating as an autonomous UAV, is airborne. A three-dimensional image processing system 326 can interface with the three-dimensional imaging sensors 322, while a two-dimensional image processing system 328 can interface with the two-dimensional imaging sensors 324. The three-dimensional image processing system 326 and the two-dimensional image processing system 328 may be incorporated within the processing system 318 or implemented as one or more separate processing systems that are in communication with the processing system 318. The three-dimensional imaging sensors 322 can include, but are not limited to one or more of: a LIght Detection and Ranging scanners (LIDAR) scanner, a stereo camera system, a structure light-based 3D/depth sensor, a time-of-flight camera, a LAser Detection and Ranging scanners (LADAR) scanner, and a RAdio Detection and Ranging (RADAR) scanner. The two-dimensional imaging sensors 324 may include one or more of: a video camera, a multi-spectral camera, or the like.

The vehicle 110 (operating as an autonomous UAV and/or OPV) may include a communication link (not shown) that is operable to receive data from a remote source, such as a ground station, another vehicle, a satellite, or other wireless transmitter. In one embodiment, the communication link enables the vehicle 110 to receive data in which the vehicle 110 may not otherwise be capable of directly sensing, such as current weather conditions. Data can be provided through communication link as requested by the processing system 318 or data can be pushed from a remote source as it becomes available absent a specific request from the processing system 318.

Additionally, the vehicle 110 may include a navigation system 334, such as, for example, an inertial measurement unit (IMU) that may be used to acquire positional data related to a current rotation and acceleration of the vehicle 110 in order to determine a geographic location of the vehicle 110 (operating as an autonomous UAV), including a change in position of the vehicle 110, or a location against a given map. The navigation system 334 can also or alternatively include a global positioning system (GPS) or the like to enhance location awareness of the vehicle 110.

In exemplary embodiments, the processing system 318 of the autonomous perception system 300 uses the perception sensor system 320 to classify potential landing zones and assist in other guidance algorithms. Contextual information captured from metadata of images acquired by the perception sensor system 320, location information determined by the navigation system 334, time of day and season of the year information known by the processing system 318, and/or weather conditions received via the communication link can be used to select and retrieve similar labeled reference images as part of a semantic classification process. Contextual information can alternatively be determined by other methods as further described herein. By using labeled reference images acquired with similar context, the accuracy of terrain classification can be improved, particularly when operating in a wide range of environmental conditions. For example, tree images in the New England area in the winter may be difficult to when using a simple trained model-based classifier using the images acquired in the summer.

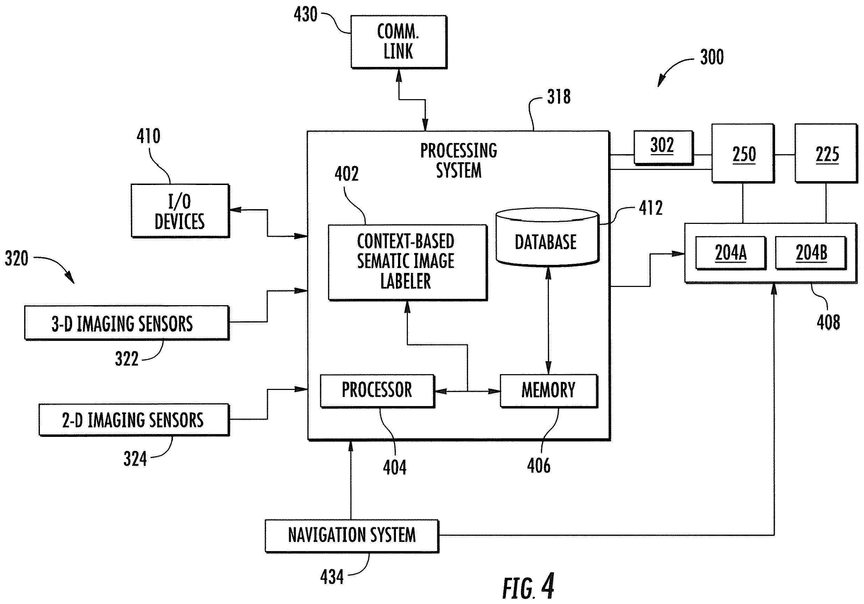

FIG. 4 illustrates a schematic block diagram of the system 300 implementing context-based autonomous perception onboard the vehicle 110 of FIG. 1 according to an embodiment. The system 300 is an embodiment of the autonomous perception system of depicted in FIG. 3.

As illustrated, the system 300 includes the processing system 318, which can be employed as an aircraft computer system that executes instructions for implementing a context-based semantic image labeler 402. The processing system 318 may be coupled to the perception sensor system 320 and receives raw sensor data from the perception sensor system 320. As described in reference to FIG. 3, the perception sensor system 320 can include one or more three-dimensional imaging sensors 322 and one or more two-dimensional imaging sensors 324. The processing system 318 includes a memory 406 that communicates with a processor 404. The memory 406 may store the context-based semantic image labeler 402 as executable instructions that are executed by processor 404. The memory 406 is an example of a non-transitory computer readable storage medium tangibly embodied in the processing system 318 including executable instructions stored therein, for instance, as firmware. Also, in embodiments, memory 406 may include random access memory (RAM), read-only memory (ROM), or other electronic, optical, magnetic or any other computer readable medium onto which instructions and data are stored. The processor 404 may be any type of processor, including a general purpose processor, a graphics processing unit (GPU), a digital signal processor, a microcontroller, an application specific integrated circuit, a field programmable gate array, or the like. Although depicted as singular blocks, the processor 404 and memory 406 can be distributed between multiple processing circuits and memory subsystems. In an embodiment, the processor 404 performs functions of the three-dimensional image processing system 326 (depicted in FIG. 3) and the two-dimensional image processing system 328 (depicted in FIG. 3).

The system 300 includes a database 412. The database 412 may be used to store labeled reference images to support context-based autonomous perception. Image data stored in the database 412 can include two-dimensional and/or three-dimensional reference images with semantic labels applied to identify terrain type and various features as observed under different sets of conditions. Images in the database 412 can be specific to a single entity type, such as a car, truck, tree, etc. Alternatively, individual images in the database 412 can be a scene that includes multiple semantic labels that identify segments in the scene by semantic type, such as a cityscape with roads, buildings, and vehicles. The database 412 may be populated as a ground-based operation on the processing system 318. Alternatively, data can be added to the database 412 via the communication link. Labeling of reference image data may be performed as an offline task. As additional perception sensor data are received from the perception sensor system 320, this data may also be stored in the processing system 318 or transmitted on the communication link for analysis, labeling, and subsequent addition to the database 412.

The system 300 may provide one or more controls, such as vehicle controls 408. The vehicle controls 408 can include the functionality provided by the controls 204A and 204B, such that the vehicle controls 408 provide the functionality on the autonomous mission analysis user interface 250 and/or inceptor(s) 225 for use by a user/operator. The vehicle controls 408 may provide directives based on, e.g., data associated with the navigation system 434. Directives provided by the vehicle controls 408 may include navigating or repositioning the vehicle 110 (operating as an autonomous UAV) to an alternate landing zone for evaluation as a suitable landing zone. The directives may be presented on one or more input/output (I/O) devices 410. The I/O devices 410 may include a display device or screen, audio speakers, a graphical user interface (GUI), etc. The autonomous mission analysis user interface 250 and inceptor(s) 225 can operate as one of the I/O devices 410.

In some embodiments, additional components or entities not shown in FIG. 4 may be included. In some embodiments, one or more of the components or entities may be optional. In some embodiments, the components or entities of the system 300 may be arranged or configured differently from what is shown in FIG. 4. For example, in some embodiments the I/O device(s) 410 may be commanded by vehicle controls 408, as opposed to being commanded by the processor 404.

The database 412 of FIG. 4 can be indexed based on context information, one or more extracted features from images, or a combination of context information and one or more extracted features from images. As such, the database 412 may be implemented as contextually-indexed database based on contextual information, a feature-indexed database based on features, or a combined contextually- and feature- indexed database. State-of-the-art indexing methods, such as Tree-Based Structure (e.g., KD-Tree), Hashing, or Binary Small Code, are applied to perform large scale and efficient nearest neighbor searches of similar images. Tree-based structure exploits spatial partitions (i.e., KD-tree) and recursive hyper plane decomposition, and provides an efficient means to search low-dimensional vector data exactly. Hashing (e.g., Locality-sensitive hashing) offers sub-linear time search by hashing highly similar examples together. Compact binary code provides a very compact representation with a few hundred bits per image.

One or more embodiments include an apparatus for operating an aircraft (e.g., vehicle 110). A cockpit 200 is arranged with two or more pilot spaces for operating the aircraft. The cockpit 200 includes first controls 204A accessible by a first pilot space 202A of the two or more pilot spaces and second controls 204B by a second pilot space 202B. The autonomous mission analysis user interface 250 is coupled to the cockpit 200, and is configured to replicate at least a portion of a functionality of the first controls 204A and the second controls 204B (such that a single pilot seated in one pilot space an fly the aircraft even though respective controls 204A or 204B in another pilot space are inaccessible by the single pilot).

The autonomous perception system 300 and/or computer system 302are configured to determine a desired functionality for vehicle 110 using information related to controls 204A or 204B, and accordingly, to cause the functionality to be operably presented on the autonomous mission analysis user interface 250.

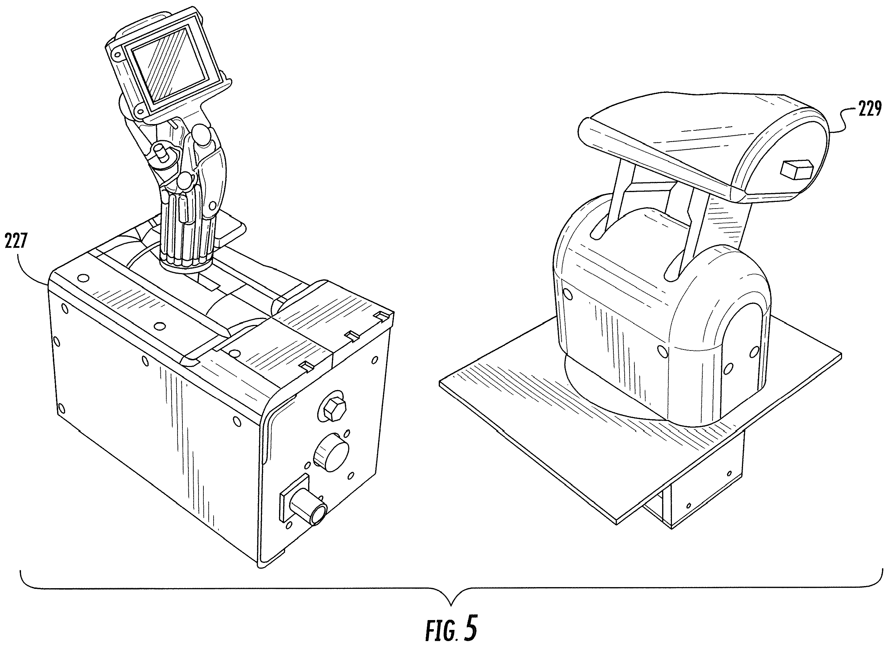

The inceptor(s) 225, illustrated in FIG. 5, is coupled to the cockpit 200 and the autonomous mission analysis user interface 250, and is configured to replicate at least a portion of a functionality of the first controls 204A and the second controls 204B. The inceptor(s) 225 can be a user interface which can include a touch-based display screen, physical buttons/knobs, a thumb wheel, proximity sensors, joystick, etc.

The inceptor(s) 225 can communicate with a user/operator using multiple information modalities including tactile and visual to convey information related to aircraft operations, aircraft dynamics, damage assessments, etc. The user/operator can use the inceptor(s) 225 to communicate with the autonomous perception system 300 to adjust aircraft operations (i.e., speed, altitude, etc.), aircraft dynamics (i.e., pitch, roll, yaw, etc.) and a flight plan based on the information received via the inceptor(s) or the autonomous mission analysis user interface 250. The inceptor(s) 225 can be used to adjust aircraft operations, aircraft dynamics and/or the flight plan without causing the autonomous perception system 300 to disengage thereby causing manual operation of vehicle 110 to ensue. Accordingly, the inceptor(s) can be used to make adjustments to aircraft operations, aircraft dynamics and/or flight plan (i.e., flight path, final destination, add or change intermediate destinations, etc.) while operating in an autonomous manner without causing the autonomous perception system 300 to disengage.

FIG. 5 depicts implementations of inceptor(s) 225 which can be used to interact with the autonomous perception system 300 and/or autonomous mission analysis user interface 250 according to an embodiment. The inceptor(s) 225 can include a right hand inceptor 227 and/or a left hand inceptor 229.

For example, the right hand inceptor 227 and/or a left hand inceptor 229 can receive input from the user/operator which can cause the autonomous perception system 300 to adjust aspects of aircraft operations, aircraft dynamics and/or a trip profile while operating in an autonomous manner without causing the autonomous perception system 300 to disengage causing manual operations to occur. For example, the left hand inceptor 229 can be used to adjust a rate of climb and descent for the vehicle 110, and the right hand inceptor 227 can be used to adjust speed and/or make changes to a heading rate for the vehicle 110.

In addition, the left hand inceptor 227 can output information from the autonomous perception system 300 to provide feedback to the user/operator related to the rate of climb and descent, via a tactile output portion of the left hand inceptor 227. The right hand inceptor 229 can output information from the autonomous perception system 300 to provide feedback to the user/operator related to speed adjustments and/or changes to a heading rate, via a visual and/or a tactile output portion of the right hand inceptor 229 to the user/operator.

Accordingly, the user/operator can express his/her desired adjustments to the aircraft operations, aircraft dynamics and/or the trip profile via the right hand inceptor 227 and/or a left hand inceptor 229 in a myriad of ways including, but not limited to: physically grabbing and moving an inceptor, pressing buttons on the inceptor, turning knobs on the inceptor and/or hand proximity to an inceptor. Additionally, the right hand inceptor 227 and/or a left hand inceptor 229 can be used by the autonomous perception system 300 to sense and interpret the user's actions (thereby capturing the user's intentions) through other inputs, such as sensing hand proximity in relation to an inceptor. Adjustments to the aircraft operations, aircraft dynamics and/or the trip profile can also be conducted via the autonomous mission analysis user interface 250, or in combination with the right hand inceptor 227 and/or a left hand inceptor 229.

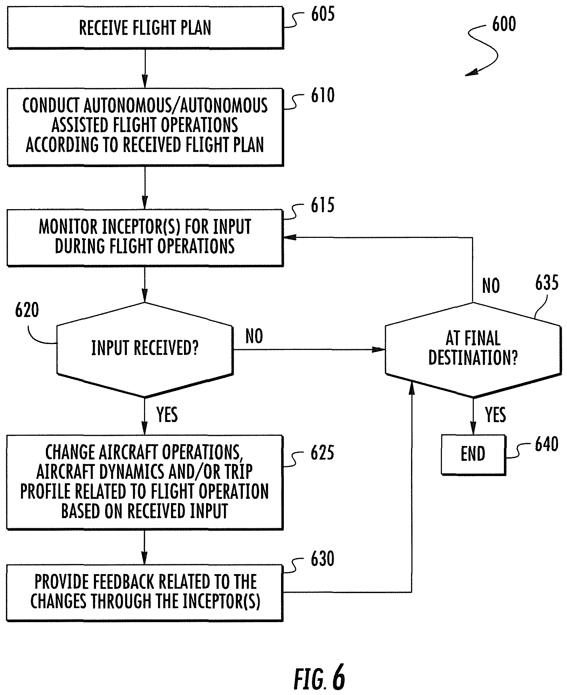

FIG. 6 depicts a flow diagram of a method 600 for implementing autonomous flight operations by an autonomous flight system according to an embodiment. At block 605, an autonomous system, for example, autonomous perception system 300, can determine a flight plan from a user/operator for a designated vehicle. The flight plan can include details related to a final destination, intermediate destinations, mission goals, an indication of whether the flight will be fully autonomous or autonomous assisted and other flight requirements. At block 610, the autonomous perception system 300 can conduct flight operations for the vehicle. The autonomous perception system 300 can determine flight requirements, for example a travel path, rate of climb, speed, etc., needed to fulfill the flight plan. At block 615, while conducting the flight operations, the autonomous perception system 300 can monitor one or more inceptors for receipt of input from a user/operator. At block 620, the autonomous perception system 300 can determine whether an input from the one or more inceptors has been received.

If no input has been received, the method 600 proceeds to block 635, where the autonomous perception system 300 can determine whether the vehicle has reached the final destination. If the vehicle has not reached the final destination, the method 600 returns to block 615. If the vehicle has reached the final destination, the method 600 ends at block 640.

If an input has been received, the method 600 proceeds to block 625, where the autonomous perception system 300 can change aspects of flight operations associated with the flight plan (e.g., flight path) in response to the change requested by the user/operator. For example, the user/operator can input changes to flight operations related a final or intermediate destination, speed, heading, climb, descent, turns, etc. The requested changes to flight operations can occur without disengaging autonomous flight operations conducted by the autonomous perception system 300. At block 630, the autonomous perception system 300 can provide feedback related to the requested change to flight operations via the one or more inceptors. The autonomous perception system 300 can also provide feedback related to other aspects of flight operations via the one or more inceptors, for example, damage assessments. After block 630, the method 600 proceeds to block 635.

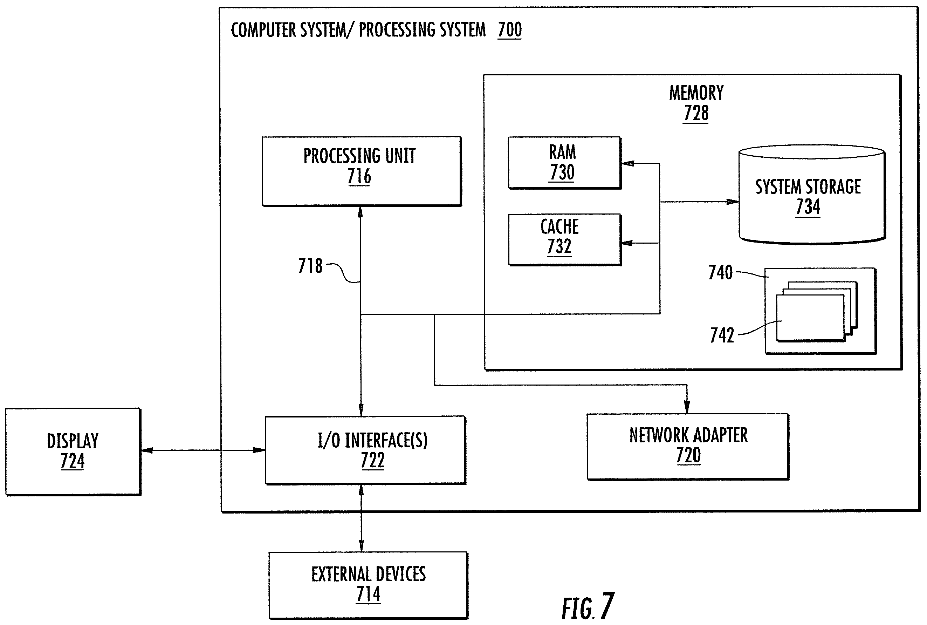

FIG. 7 depicts a schematic of an example computing system/processing system 700 according to an embodiment. The computing system/processing system 700 can be representative of various types of computer systems on which embodiments can be implemented. Various processors, computers, computing systems, processing systems, electronics, controls, panels, features, sensors, systems, etc., (as well as the autonomous mission analysis user interface 250, computing system 302, autonomous perception system 300, controls 204A, 204B, processing system 318, etc.) can utilize, be implemented in, be integrated with, and/or include any of the elements of computing system/processing system 700, as understood by one skilled in the art. Any feature in computing system/processing system 700 can incorporate and/or implement any aspect of embodiments discussed herein.

Examples of well-known computing systems, environments, and/or configurations that may be suitable for use with computing system/processing system 700 include, but are not limited to, personal computer systems, server computer systems, thin clients, thick clients, hand-held or laptop devices, multiprocessor systems, microprocessor-based systems, set top boxes, programmable consumer electronics, network PCs, minicomputer systems, mainframe computer systems, and distributed cloud computing environments that include any of the above systems or devices, and the like.

Computing system/processing system 700 may be described in the general context of computer system-executable instructions, such as program modules, being executed by a computer system. Generally, program modules may include routines, programs, objects, components, logic, data structures, and so on that perform particular tasks or implement particular abstract data types. Computing system/processing system 700 may be practiced in distributed cloud computing environments where tasks are performed by remote processing devices that are linked through a communications network. In a distributed cloud computing environment, program modules may be located in both local and remote computer system storage media including memory storage devices.

The components of computing system/processing system 700 may include, but are not limited to, one or more processors or processing units 716, a system memory 728, and a bus 718 that couples various system components including system memory 728 to processor 716. Bus 718 represents one or more of any of several types of bus structures, including a memory bus or memory controller, a peripheral bus, an accelerated graphics port, and a processor or local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnects (PCI) bus.

Computing system/processing system 700 typically includes a variety of computer system readable media. Such media may be any available media that is accessible by computing system/processing system 700, and it includes both volatile and non-volatile media, removable and non-removable media. The system memory 728 can include computer system readable media in the form of volatile memory, such as random access memory (RAM) 730 and/or cache memory 732. Computing system/processing system 700 may further include other removable/non-removable, volatile/non-volatile computer system storage media. By way of example only, storage system 734 can be provided for reading from and writing to a non-removable, non-volatile magnetic media (not shown and typically called a "hard drive"). Although not shown, a magnetic disk drive for reading from and writing to a removable, non-volatile magnetic disk (e.g., a "floppy disk"), and an optical disk drive for reading from or writing to a removable, non-volatile optical disk such as a CD-ROM, DVD-ROM or other optical media can be provided. In such instances, each can be connected to bus 718 by one or more data media interfaces. Memory 728 may include at least one program product having a set (e.g., at least one) of program modules that are configured to carry out the functions of embodiments of the invention.

Program/utility 740, having a set (at least one) of program modules 742, may be stored in memory 728 by way of example, and not limitation, as well as an operating system, one or more application programs, other program modules, and program data. Each of the operating system, one or more application programs, other program modules, and program data or some combination thereof, may include an implementation of a networking environment. Program modules 742 generally carry out the functions and/or methodologies of embodiments of the invention as described herein.

Computing system/processing system 700 may also communicate with one or more external devices 714 such as a keyboard, a pointing device, a display 724, etc.; one or more devices that enable a user to interact with computer system/server 712; and/or any devices (e.g., network card, modem, satellite, etc.) that enable computing system/processing system 700 to communicate with one or more other computing devices. Such communication can occur via Input/Output (I/O) interfaces 722. Still yet, computing system/processing system 700 can communicate with one or more networks such as a local area network (LAN), a general wide area network (WAN), and/or a public network (e.g., the Internet) via network adapter 720. As depicted, network adapter 720 communicates with the other components of computing system/processing system 700 via bus 718. It should be understood that although not shown, other hardware and/or software components could be used in conjunction with computing system/processing system 700. Examples include but are not limited to: microcode, device drivers, redundant processing units, external disk drive arrays, RAID systems, tape drives, and data archival storage systems, etc.

Technical effects and benefits include a quick, efficient way to communicate with and interact with the autonomous system to address multiple interaction requirements that arise with an autonomous system without disengaging operations being conducted by the autonomous system. One or more inceptors can be used in which each incorporates tactile and visual cueing that can be used to interact with an autonomous flight control system in order to change flight operations, flight dynamics, mission goals and/or a flight plan. A user can express his/her intentions (i.e., desired changes to an on-going autonomous flight) to the autonomous system through the inceptors in a myriad of ways including force, touch, and through the use of integrated proximity sensors, hand proximity.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. An apparatus comprising:
a computing system; and
a user interface configured to receive an input from a user related to one or more changes to a flight path and transmit the input to an autonomous flight system;
wherein the received input via the apparatus does not cause the autonomous flight system to disengage.

2. The apparatus of claim 1, wherein the user interface further provides feedback associated with the one or more changes to the user, particularly wherein the feedback is visual, auditory or tactile.

3. The apparatus of one of claims 1-2, wherein the user interface comprises at least one of: a touch-based display screen, a physical button, a knob, a proximity sensor, a thumb wheel and a joystick.

4. The apparatus of claim 3, wherein the touch-based display screen provides one of: visual feedback, an alert or mode announcements related to the one or more changes to the user, and/or wherein the touch-based display screen provides a change confirmation associated the one or more changes to the user.

5. The apparatus of one of claims 1-4, wherein the one or more changes include changes to at least one of a final destination, an intermediate destination, speed, a heading, climb, descent, a turn.

6. The apparatus of one of claims 1-5, wherein the apparatus is communicatively coupled to an autonomous mission analysis user interface.

7. A method for implementing autonomous flight operations in an autonomous flight system, the method comprising:
determining, by a processor, a flight plan; and
conducting, by the processor, autonomous flight operations on a vehicle in response to the determined flight plan;
determining, by the processor, that an input is received at one or more inceptors; and
changing, by the processor, a flight path in response the received input.

8. The method of claim 7 further comprising monitoring, by the processor, one or more inceptors for an associated input, and/or wherein the one or more inceptors is communicatively coupled to an autonomous mission analysis user interface.

9. The method of claim 7 or 8 further comprising providing feedback related to changes in aircraft operations, aircraft dynamics or the trip profile to a user via the one or more inceptors, particularly wherein the feedback is visual, auditory or tactile.

10. The method of one of claims 7-9, wherein changes to the aircraft operations, aircraft dynamics or the trip profile does not cause the autonomous system to disengage.

11. The method of one of claims 7-10, wherein the autonomous system controls a rotary-wing or fixed-wing aircraft.

12. The method of one of claims 7-11, wherein the one or more inceptors comprise at least one of: a touch-based display screen, a physical button, a knob, a proximity sensor, a thumb wheel and a joystick, particularly wherein the touch-based display screen provides one of: visual feedback, an alert or mode announcements related to changes to the aircraft operations, aircraft dynamics or the trip profile.

13. An optionally-piloted vehicle system for an aircraft, the optionally-piloted vehicle system comprising:
an autonomous system; and
a processing system coupled to the autonomous system, the processing system comprising a processor and memory having instructions stored thereon that, when executed by the processor, cause the autonomous system to perform a method according to one of claims 7-12.

14. The optionally-piloted vehicle system of claim 13, wherein the one or more inceptors are configured to provide feedback related to changes in the flight path to a user.

15. The optionally-piloted vehicle system of claim 13 or 14, wherein changes to the flight path does not cause the autonomous system to disengage.
